# EUROPÄISCHE PATENTSCHRIFT

(11) **EP 3 703 902 B1**
(45) Veröffentlichungstag und Bekanntmachung des Hinweises auf die Patenterteilung: **10.01.2024**
(21) Anmeldenummer: 18701737.1
(22) Anmeldetag: 24.01.2018
(51) Int. Cl.: B23P 21/00, B62D 65/18

(54) **FÖRDERSYSTEM UND VERFAHREN ZUM GLEICHZEITIGEN TRANSPORT VON WERKSTÜCKEN UND WERKERN**
CONVEYING SYSTEM AND METHOD FOR SIMULTANEOUSLY TRANSPORTING WORKPIECES AND WORKERS
SYSTÈME DE TRANSPORT ET PROCÉDÉ DE TRANSPORT SIMULTANÉ DE PIÈCES ET DE MONTEURS

(30) Priorität: 24.02.2017 DE 102017103931
(43) Veröffentlichungstag der Anmeldung: 09.09.2020
(73) Patentinhaber: Eisenmann GmbH, 71032 Böblingen (DE)
(72) Erfinder: VETTER, Svenja, 72149 Neustetten (DE); SCHULZE, Herbert, 71134 Aidlingen (DE)
(74) Vertreter: Ostertag & Partner Patentanwälte mbB
(86) Internationale Anmeldenummer: PCT/EP2018/051694
(87) Internationale Veröffentlichungsnummer: WO 2018/153604

(56) Entgegenhaltungen:
- WO-A1-2011/053681
- DE-A1-102005 034 582
- DE-A1-102006 007 780
- DE-A1-102011 105 595
- DE-A1-102012 107 511
- DE-A1-102015 214 980
- US-A1- 2012 285 797

## Beschreibung

### HINTERGRUND DER ERFINDUNG

### 1. Gebiet der Erfindung

Die Erfindung betrifft ein Fördersystem und ein Verfahren zum gleichzeitigen Transport von Kraftfahrzeugen oder anderen Werkstücken und von Werkern gemäß den Oberbegriffen der Ansprüche 1 und 12.

Derartige Fördersysteme werden insbesondere bei der Endmontage von Kraftfahrzeugen, großen Haushaltsgeräten oder von Maschinen eingesetzt, die in großen Stückzahlen hergestellt werden.

### 2. Beschreibung des Standes der Technik

Bei der Endmontage von Werkstücken werden häufig Fördersysteme eingesetzt, bei denen die Werker über einen längeren Zeitraum gemeinsam mit den Werkstücken transportiert werden. Auf diese Weise können die Werker Arbeiten an den Werkstücken vornehmen, ohne neben den Werkstücken herlaufen zu müssen.

Die Fahrzeuge dieser bekannten Fördersysteme weisen eine Werkstückaufnahme zur Befestigung des Werkstücks, eine für die Werker begehbare Montageplattform und ein Fahrwerk mit Rädern auf. Üblicherweise bilden die Fahrzeuge einen Schubverband, während sie Werker gemeinsam mit den Werkstücken transportieren. Das jeweils letzte Fahrzeug schiebt dabei die vorausfahrenden Fahrzeuge von hinten an, wobei es durch ortsfeste externe Antriebsmittel angetrieben wird. Bei diesen Antriebsmitteln kann es sich beispielsweise um Reibräder handeln, die von außen an den Längsseiten der jeweils letzten Montageplattform angreifen und auf diese Weise die für die Vorwärtsbewegung des gesamten Schubverbands erforderliche Schubkraft aufbringen. Durch das Anschieben von hinten wird erreicht, dass die Montageplattformen innerhalb des Schubverbands spaltfrei aneinander angrenzen, sodass die Werker gefahrlos auf benachbarte Montageplattformen überwechseln könne. Am Ende eines Fertigungsabschnitts wird der Schubverband häufig wieder aufgelöst. Hierzu werden die Werkstücke üblicherweise von den Fahrzeugen abgenommen. Die leeren Fahrzeuge werden anschließend in einer Umsetzstation vertikal oder horizontal umgesetzt und laufen auf einer anderen Förderstrecke leer zurück. Anstatt den Schubverband dauerhaft aufzulösen, können die Fahrzeuge auch kurzfristig vereinzelt und auf einer Kurvenfahrt zu einem weiteren Fertigungsabschnitt gefördert werden, wo sie erneut einen Schubverband bilden.

Aus der DE 40 20 286 C2 ist ein Fördersystem dieser Art bekannt. Die dort beschriebenen Fahrzeuge weisen jedoch zusätzlich eigene Antriebe auf. Dadurch können sich die Fahrzeuge zwischen den Fertigungsabschnitten selbstständig fortbewegen. Sobald ein Fahrzeug in den Schubverband aufgenommen ist, wird der Eigenantrieb abgeschaltet. Eine Besonderheit bei den Fahrzeugen dieses bekannten Fördersystems besteht darin, dass die Antriebsräder um 90° Grad eingeschlagen werden können. Dadurch können die Fahrzeuge quer zur nächsten Fertigungsabschnitt fahren, um dort in den nächsten Schubverband aufgenommen zu werden.

Ein ähnliches Fördersystem ist aus der DE 10 2005 034 582 A1 bekannt. Auch dort verfügen die Fahrzeuge über einen eigenen Antrieb, der aber auch zur Förderung im Schubverband verwendet wird. Auf die externen ortsfesten Antriebsmittel kann dadurch verzichtet werden. Die Fahrzeuge müssen deswegen nicht den großen Längs- und Querkräften standhalten, die durch das Fahren im Schubverband durch die seitlichen Reibräder hervorgerufen werden. Dadurch können die Fahrzeuge leichter gebaut werden.

Einen anderen Weg zur Gewichtsverringerung beschreibt die DE 10 2005 018 424 A1. Dort werden Montageplattformen für derartige Fahrzeuge vorgeschlagen, die in Leichtbauweise hergestellt sind.

Das Fahren im Schubverband bringt jedoch auch einige Nachteile mit sich. So werden beispielsweise Kraftfahrzeuge heute immer stärker individualisiert. Dadurch kommt es immer häufiger vor, dass einzelne Kraftfahrzeuge erheblich mehr oder andere Bearbeitungsschritte benötigen als andere Kraftfahrzeuge des gleichen Models. Außerdem werden bereits jetzt bei einigen Herstellern unterschiedliche Modelle auf der gleichen Fertigungslinie montiert, um eine gleichmäßigere Auslastung zu ermöglichen. Bislang sind alle Bearbeitungsstationen hintereinander angeordnet, so dass jedes Kraftfahrzeug alle Bearbeitungsstationen durchläuft, auch wenn dort überhaupt keine Bearbeitung stattfindet.

Ähnliche Probleme stellen sich auch bei anderen Werkstücken, z. B. größeren Haushaltsgeräten oder Maschinen, die in großen Stückzahlen hergestellt werden.

Aus der DE 10 2012 107 511 A1 ist eine Montagevorrichtung mit einer Tragstruktur mit einer Fahreinrichtung zum gesteuerten Verfahren der Montagevorrichtung bekannt. Mit einer Hubeinrichtung kann ein Motor angehoben werden. Eine Personalplattform erlaubt eine Personalaufnahme.

Aus der WO 2011/053681 A1 und der DE 10 2015 214 980 A1 sind Fördersysteme bekannt, bei denen die Fahrzeuge individuell unterschiedliche Abfolgen von Bearbeitungsstationen abfahren können. Die WO 2011/053681 A1 offenbart die Merkmale der Oberbegriffe der Ansprüche 1 und 12.

### ZUSAMMENFASSUNG DER ERFINDUNG

Aufgabe der Erfindung ist es, ein Fördersystem und ein Verfahren zum gleichzeitigen Transport von Werkstücken und Werkern bereitzustellen, das besser an die modernen Produktionsabläufe angepasst ist.

Erfindungsgemäß wird diese Aufgabe durch ein Fördersystem mit den Merkmalen des Anspruchs 1 gelöst. Vorteilhafte Ausführungsbeispiele des Fördersystems sind in den abhängigen Ansprüche 2 bis 11 angegeben.

Das erfindungsgemäße Fördersystem kombiniert damit die Vorteile beweglicher Montageplattformen und fahrerloser Transportsysteme (FTS), mit denen bislang ausschließlich Werkstücke, nicht aber Werker transportiert werden. Wie fahrerlose Transportsysteme können die erfindungsgemäßen Fahrzeuge eigenständig und ohne Schleppkabel fahren. Die Fahrzeuge verfügen deswegen über einen eigenen Antrieb und eine geeignete Energieversorgung, beispielsweise in Form eines Akkumulators. Je nach den spezifischen örtlichen Gegebenheiten und dem daran angepassten Steuerungssystem benötigen die erfindungsgemäßen Fahrzeuge in der Regel Navigationsmittel, damit sie selbstständig ihren Weg zur nächsten Bearbeitungsstation finden. Zur Ortung können beispielsweise funkbasierte Navigationssysteme, Ultraschall oder Laserscanner eingesetzt werden, die Winkel zu Reflexstreifen bestimmen, die an bestimmten Stellen entlang des Förderweges befestigt sind. Daneben kommt auch eine Navigation mithilfe von Fernsehkameras und Mustererkennung in Betracht. In den meisten Fällen wird man aus Sicherheitsgründen auch Mittel zur Hinderniserkennung vorsehen. Dabei kann es sich z. B. um einen Laserscanner handeln, der Hindernisse und insbesondere Personen erkennen und ein Abbremsen oder ein Ausweichmanöver veranlassen kann.

Mit derart ausgestatteten Fahrzeugen ist es möglich, individuell unterschiedliche Abfolgen von Bearbeitungsstationen abzufahren. Anders als bei den herkömmlichen Fördersystemen, bei denen sich alle Fahrzeuge hintereinander im Schubverband bewegen, müssen die Fahrzeuge somit nur solche Bearbeitungsstationen anfahren, die zu der Bearbeitung des transportierten Werkstücks tatsächlich erforderlich sind. Die Werker können während der Fahrten zwischen den Bearbeitungsstationen auf der Montageplattform bleiben und die Zeit für die Bearbeitung des Werkstücks nutzen. Je nach den Anforderungen des Einzelfalls kann es jedoch sinnvoller sein, wenn die Werker vor allen oder vor bestimmten Fahrten die Montageplattform verlassen. Das Fahrzeug transportiert dann nur das Werkstück, aber nicht die Werker zur nächsten Bearbeitungsstation.

Während beim Transport in einem Schubverband die Bearbeitungsstationen alle entlang einer Fertigungslinie angeordnet sind, können die Bearbeitungsstationen bei dem erfindungsgemäßen Fördersystem so verteilt angeordnet sein, dass sie teilweise nur durch eine Seitwärts- oder Kurvenfahrt, aber ohne Fahrtrichtungsumkehr von den Fahrzeugen angefahren werden können. Dadurch können sich - ähnlich wie in einem Rangierbahnhof - einzelne Fertigungslinien in mehrere Teillinien aufspalten und später wieder zusammengeführt werden.

Im Gegensatz zu herkömmlichen Fertigungslinien müssen die Bearbeitungsstationen vom Grundsatz her nicht mehr entlang einer geraden, mäandrierenden oder wie auch immer gewundenen Linie im Wesentlichen hintereinander angeordnet sein. Das erfindungsgemäße Fördersystem ermöglicht es, die Bearbeitungsstationen völlig frei innerhalb eines vorgegebenen Fertigungsareals fahren zu lassen. Die Fertigungsabläufe müssen deswegen nicht mehr "linear" organisiert sein, sondern können auch -jedenfalls innerhalb gewisser-Grenzen frei variiert werden.

Während bislang beispielsweise festgelegt sein musste, ob zuerst eine Türverkleidung oder ein Scheibenwischer bei einem Kraftfahrzeug eingebaut werden muss, kann diese Entscheidung nun davon abhängig gemacht werden, ob die betreffende Bearbeitungsstation gerade von einem anderen Fahrzeug besetzt ist oder nicht. Die Fahrzeuge können beispielsweise so gesteuert werden, dass sie der Steuerungseinrichtung zu vorgegebenen Zeitpunkten oder ereignisgesteuert über die Art und den Fertigungszustand des jeweils transportierten Werkstücks informieren. Die Steuerungseinrichtung legt dann für jedes Fahrzeug unter Berücksichtigung des Belegungszustands der Bearbeitungsstationen mit anderen Fahrzeugen zumindest eine als nächste anzufahrende Bearbeitungsstation und vorzugsweise die Abfolge aller noch anzufahrenden Bearbeitungsstationen fest.

Erhält die Steuerungseinrichtung keine Informationen über die Art und den Fertigstellungszustand des jeweils transportierten Werkstücks, so kann sie nicht wissen kann, ob ein bestimmter Bearbeitungsschritt vollständig abgeschlossen wurde, ein vollständiger Abschluss (z. B. wegen eines fehlenden Teils) nicht möglich war oder die Bearbeitung zwar durchgeführt wurde, aber mit einem fehlerhaften Ergebnis. Erst mit diesen Informationen kann die Steuerungseinrichtung eine sinnvolle Entscheidung darüber treffen, welche Bearbeitungsstation als nächste angefahren werden soll.

Im Prinzip ist jedoch auch denkbar, mehr "Intelligenz" auf die Fahrzeuge selbst zu verlagern. In diesem Fall kann die Steuerungseinrichtung beispielsweise die Fahrzeuge über den Belegungszustand aller Bearbeitungsstationen informieren. Die Fahrzeuge entscheiden dann selbstständig, welche Bearbeitungsstationen sie als nächste aufsuchen. Die Fahrzeuge teilen der Steuerungseinrichtung diese Entscheidung mit, so dass diese die betreffende Bearbeitungsstation für einen gewissen Zeitraum als belegt ansehen kann und diese Information an die übrigen Fahrzeuge verteilt.

In Betracht kommt ferner, auch die Orte der Bearbeitungsstationen innerhalb eines vorgegebenen Fertigungsareals zu variieren. Die Bearbeitungsstationen sind dann selbst als mobile Einheiten ausgelegt, die innerhalb des Fertigungsareals innerhalb gewisser Grenzen verlagert werden können, um sich variabel an die Zahl und Art der zu fertigenden Werkstücke anzupassen. Die selbstfahrenden Fahrzeuge des erfindungsgemäßen Fördersystems sind dazu in der Lage, sich auch in einer solchen variable Anordnung von Bearbeitungsstationen jederzeit orientieren zu können und den Weg zu der jeweils nächsten Bearbeitungsstation aufzufinden.

Da Kurvenfahrten vergleichsweise viel freien Raum benötigen, können die Fahrzeuge jeweils einen omnidirektionalen Antrieb haben, mit dem die Fahrzeuge aus dem Stand heraus in eine beliebige Richtung fahren können. Die omnidirektionalen Antriebe können beispielsweise Allseitenräder, Mecanum-Räder oder Fahr-Dreh-Module umfassen, wie dies an sich im Stand der Technik bekannt ist.

Mit einem solchen omnidirektionalen Antrieb können die Fahrzeuge beispielsweise auf der Stelle gedreht oder gewendet werden. Außerdem ist es möglich, die Fahrzeuge seitlich ohne Kurvenfahrt zu versetzen. Dadurch können sie raumsparend aus einer Linie herausgelöst werden, um zu einer bestimmten Bearbeitungsstation zu fahren oder nachfolgende Fahrzeuge überholen zu lassen. Umgekehrt können die Fahrzeuge auch so gesteuert werden, dass ein erstes Fahrzeug ein zweites Fahrzeug überholt, während sich das zweite Fahrzeug in einer Bearbeitungsstation befindet.

Vor allem dann, wenn Werker sich während der Fahrt der Fahrzeuge auf den Montageplattformen befinden, muss sichergestellt sein, dass Werker nicht beim Anfahren, Bremsen oder anderen Fahrmanövern gefährdet werden. Erfindungsgemäß haben die Fahrzeuge deswegen jeweils eine Detektionseinrichtung, die dazu eingerichtet ist, die Anwesenheit eines Werkers auf der jeweiligen Montageplattform zu detektieren. Bei der Detektionseinrichtung kann es sich beispielsweise um einen berührungsempfindlichen Bodenbelag handeln, der zumindest einen Teil der Montageplattform überdeckt. Die Steuerungseinrichtung kann dabei so eingerichtet sein, dass für den Fall, dass sich ein Werker auf der Montageplattform befindet, das Fahrzeug entweder gar nicht in Bewegung setzen darf oder bestimmte Fahrmanöver (Beschleunigen, Abbremsen, Kurvenfahrten etc.) nur nach vorheriger Abgabe eines optischen oder akustischen Warensignals erfolgen dürfen. Ferner kommt in Betracht, bei Anwesenheit eines Werkers auf der Montageplattform bestimmte Fahrmanöver nur mit Einschränkung durchzuführen. So kann beispielsweise festgelegt sein, dass die bei den Fahrmanövern auftretenden Beschleunigungen in Längs- oder Querrichtung unterhalb vorgegebener Grenzwerte bleiben müssen.

Vorzugsweise ist die Detektionseinrichtung dazu eingerichtet, nicht nur die Anwesenheit eines Werkers an sich, sondern auch seinen Ort auf der jeweiligen Montageplattform zu detektieren. Dann kann die Steuerung des Fahrzeugs zusätzlich von dieser Ortsinformation abhängig gemacht werden. Wenn sich ein Werker beispielsweise am in Fahrtrichtung hinten liegenden Ende der Montageplattform befindet, kann eine zusätzliche Beschleunigung schnell dazu führen, dass der Werker über die hintere Kante der Montageplattform fällt. In einem solchen Falle sollte der Beschleunigungsvorgang besonders behutsam durchgeführt werden, oder es ist mit zusätzlichen Maßnahmen sicherzustellen, dass der Werker sich auf der Montageplattform festhält, bevor der Beschleunigungsvorgang beginnt.

Je höher die Ortsauflösung der Detektionseinrichtung ist, desto besser kann die Steuerungseinrichtung die Fahrmanöver der Fahrzeuge davon abhängig machen, wo der oder die Werker sich auf der Montageplattform befinden. Idealerweise beträgt die Ortsauflösung mindestens 50 cm.

Vorteilhaft ist es außerdem, wenn die Detektionseinrichtung ein vom Werker zu tragendes Identifikationselement und eine am Fahrzeug angeordnete Leseeinrichtung umfasst, die dazu eingerichtet ist, auf dem Identifikationselement gespeicherte Informationen berührungslos zu lesen. Auf diese Weise kann die Detektionseinrichtung feststellen, ob sich der richtige Werker auf der Montageplattform des betreffenden Fahrzeugs befindet. Da der Fahrbetrieb insgesamt durch das selbsttätige Anfahren unterschiedlicher Bearbeitungsstationen komplex wird, ist es wichtig, dass die Werker verifizieren können, dass sie sich zu einem gegebenen Zeitpunkt auf dem richtigen Fahrzeug befinden. Die Steuerungseinrichtung kann die Fahrzeuge dann beispielsweise so steuern, dass die Fahrzeuge erst dann anfahren dürfen, wenn sich alle für den nächsten Bearbeitungsschritt benötigten Werker auf der Montageplattform befinden. Außerdem können Warnhinweise individuell für einzelne Werker generiert werden. Bei dem Identifikationselement kann es sich beispielsweise um einen RFID-Transponder, dessen Informationen per Funk ausgelesen werden, oder um einen QR-Code handeln, dessen Informationen optisch abgelesen werden.

Es ist außerdem möglich, alle oder zumindest alle größeren zu verbauenden Teile mit einem RFID-Transponder oder einem anderen Identifikationselement zu versehen, das berührungslos gelesen werden kann. Auf diese Weise lässt sich durch Abrufen aller Identifizierungsinformationen erkennen, ob in dem betreffenden Werkstück die richtigen Teile verbaut wurden und/oder die für den Einbau bereitgehaltenen Teile tatsächlich zum Werkstück passen. Wenn das Fertigungsareal über ein dichtes Netz von Leseeinrichtungen verfügt, kann auch eine vollständige Erfassung aller Werkstücke, Teile und Werker stattfinden. Die dabei erzieltbare Ortsauflösung wird durch die Dichte der Leseeinrichtungen bestimmt.

Alternativ zu Detektionseinrichtungen auf den Fahrzeugen kann auch eine externe Detektion der Werker vorgesehen sein. So können beispielsweise im gesamten Fertigungsareal Kameras installiert sein, die alle Bereiche des Fertigungsareals überwachen, in denen sich Fahrzeuge befinden können. Vorzugsweise verfügen die Fahrzeuge zum Bereitstellen der für den Fahrbetrieb erforderlichen Energie über einen wiederaufladbaren elektrischen Energiespeicher, der während des Fahrens der Fahrzeuge aufladbar ist. Dadurch müssen die Fahrzeuge zum Aufladen der elektrischen Energiespeicher nicht eine Ladestation anfahren, sondern können während ihres Einsatzes im Fertigungsbetrieb aufgeladen werden. Denkbar ist jedoch selbstverständlich auch, dass der elektrische Energiespeicher eines Fahrzeugs nur dann aufgeladen wird, wenn das Fahrzeug steht. Dies kann gegebenenfalls auch in einer Bearbeitungsstation der Fall sein.

Die Bearbeitungsstationen unterscheiden sich regelmäßig voneinander durch die dort angeordneten Werkzeuge und/oder Handhabungsgeräte und/oder Montageroboter. Ein weiteres Unterscheidungskriterium können Teile oder Materialien sein, die für die Fertigung benötigt und an den Bearbeitungsstationen bereitgestellt werden. Als Bearbeitungsstationen werden hier im weiteren Sinne auch solche Stationen angesehen, bei denen keine Bearbeitung des Werkstücks im engeren Sinne erfolgt, sondern lediglich Teile, Materialien oder Werkzeuge nachgefüllt, ausgetaucht oder entfernt werden.

Vorzugsweise erstreckt sich die Montageplattform eines Fahrzeugs über seine gesamte Länge hinweg. In Betracht kommt jedoch auch, den Front- und/oder Heckbereich des Fahrzeugs mit stationären Aufbewahrungseinrichtungen zu versehen, die nicht begehbar sind.

Durch die erfindungsgemäße Individualisierung der im Fördersystem durchgeführten Fahrten ist nicht ausgeschlossen, dass aufeinander folgende Fahrzeuge sich zeitweise während des Fahrens so berühren, dass sie einen Verband bilden. Bearbeitungsstationen, die von allen Fahrzeugen angefahren werden müssen, können dann wie bisher in einer Linie hintereinander angeordnet sein.

Bei einem vorteilhaften Ausführungsbeispiel weist mindestens ein Fahrzeug eine für einen sich auf der Montageplattform befindenden Werker zugängliche Eingabeeinrichtung auf, über die sich der Werker der Steuereinrichtung eine von dem betreffenden Fahrzeug noch anzufahrende Bearbeitungsstation vorgeben kann. Eine solche Eingabeeinrichtung kann stationär am Fahrzeug befestigt sein, aber auch schnurlos mit dem Fahrzeug oder direkt mit der Steuerungseinrichtung kommunizieren. Der Werker hat dann beispielsweise die Möglichkeit, eine Bearbeitungsstation erneut anzufahren, falls er einen Fertigungs- oder Montagefehler erkannt hat. Die Steuerungseinrichtung sorgt dafür, dass das betreffende Fahrzeug seinen Weg umdisponiert und die betreffende Bearbeitungsstation oder eine andere Bearbeitungsstation, in welcher der gleiche Bearbeitungsschritt durchgeführt werden kann, anfährt.

Bei einigen Ausführungsbeispielen ist mindestens ein Fahrzeug aus mehreren Untereinheiten zusammengesetzt. Diese Untereinheiten sind quer zu einer Längsrichtung des Fahrzeugs nebeneinander angeordnet und lösbar miteinander gekuppelt, was sowohl mechanische, meist auf Formbeschluss beruhende Kupplungen als auch regelungstechnische Kupplungen umfasst, bei denen die Untereinheiten in einem konstanten Abstand oder sich leicht berührend nebeneinander herfahren. Die Untereinheiten weisen außerdem voneinander getrennte Fahrwerke auf, sodass die Untereinheiten nach Entkuppeln getrennt und unabhängig voneinander verfahrbar sind. Mindestens eine und vorzugsweise alle Untereinheiten hat außerdem einen eigenen Antrieb.

Durch eine solche Unterteilung der Fahrzeuge in Untereinheiten kann die Flexibilität des Fördersystems nochmals erhöht werden. Das Abkuppeln von einer oder mehreren Untereinheiten kann beispielsweise dann zweckmäßig sein, wenn bei bestimmten Bearbeitungsvorgängen ein Zugang an Orten benötigt wird, die normalerweise von der Montageplattform ausgefüllt sind. Anstatt das Werkstück mit einer Hubvorrichtung anzuheben, können seitliche Untereinheiten der Montageplattform abgekoppelt und entfernt werden, um unten liegende Teile des Werkstücks besser erreichen zu können.

Günstig ist es dabei insbesondere, wenn eine der Untereinheiten eine Werkstückträgereinheit ist, welche die Werkstückaufnahme aufweist, und wenn eine andere Untereinheit eine Plattformeinheit ist, die zumindest im Wesentlichen frei für Werker begehbar ist. Dadurch werden die unterschiedlichen Funktionen der Fahrzeuge, nämlich der Transport der Werkstücke und der Transport der Werker, voneinander unabhängigen Untereinheiten zugewiesen.

Besonders günstig ist es dabei, wenn das mindestens eine Fahrzeug zwei Plattformeinheiten aufweist, die zu beiden Seiten an die Werkstückträgereinheit angekuppelt sind. Bei entkoppelten Plattformeinheiten verbleibt dann eine schmalere Werkstückträgereinheit, die beispielsweise einer Bearbeitungsstation zugeführt werden kann, in der lediglich Roboter tätig sind und von der Werker aus Sicherheitsgründen fernzuhalten sind. Die Werker können dann auf den Plattformeinheiten zu einer anderen Werkstückträgereinheit fahren (und umgekehrt), um sich mit dieser zu verbinden. Wenn die Plattformeinheit eine Aussparung hat, in welche die Werkstückträgereinheit seitlich eingefügt ist, lassen sich die Untereinheiten besonders stabil durch Formschluss miteinander verbinden.

Mindestens eine Untereinheit kann dabei einen omnidirektionalen Antrieb haben, mit dem die Untereinheit aus dem Stand heraus in eine beliebige Richtung fahren kann.

Bei einem anderen Ausführungsbeispiel ist die Plattformeinheit entlang der Längsrichtung kürzer als die Werkstückträgereinheit. Dies eröffnet beispielsweise die Möglichkeit, die kürzere Plattformeinheit seitlich an der Werkstückträgereinheit entlang mit einer Geschwindigkeit zu verfahren, die sich von der Geschwindigkeit der Werkstückträgereinheit unterscheidet. Dadurch kommt es zu einer Relativbewegung zwischen der Werkstückträgereinheit und der Plattformeinheit, ohne dass die Plattformeinheit über das vordere oder hintere Ende der Werkstückträgereinheit hinausragt. Bei bestimmten Bearbeitungsvorgängen kann eine solche Relativbewegung erwünscht sein, z. B. wenn ein Werker an der Seite eines Kraftfahrzeugs eine Zierleiste befestigen soll. Die Plattformeinheit ist dann so an die Werkstückträgereinheit gekuppelt, dass sie bei geschlossener elektrisch-regelungstechnischer oder mechanischer Kupplung an der Werkstückträgereinheit entlang in Längsrichtung verfahrbar ist.

Hinsichtlich des Verfahrens wird die eingangs gestellte Aufgabe gelöst durch ein Verfahren mit den Merkmalen des Anspruchs 12. Vorteilhafte Ausführungsbeispiele des Verfahrens sind in den abhängigen Ansprüche 13 bis 15 angegeben.

Die zum erfindungsgemäßen Fördersystem erläuterten vorteilhaften Wirkungen und Ausgestaltungen gelten insoweit entsprechend.

Eine Steuerungseinrichtung kann von den Fahrzeugen zu vorgegebenen Zeitpunkten oder ereignisgesteuert über die Art und den Fertigstellungszustand des jeweils transportieren Werkstücks informiert werden. Die Steuerungseinrichtung legt dann für jedes Fahrzeug unter Berücksichtigung des Belegungszutands der Bearbeitungsstationen mit anderen Fahrzeugen zumindest eine als nächste anzufahrende Bearbeitungstation und vorzugsweise die Abfolge aller noch anzufahrenden Bearbeitungsstationen fest.

Zumindest einige der Bearbeitungsstationen können so verteilt angeordnet sein, dass sie nur durch eine Seitwärts- oder Kurvenfahrt, aber ohne Fahrtrichtungsumkehr von den Fahrzeugen angefahren werden können.

Die Fahrzeuge können einen omnidirektionalen Antrieb haben, mit dem die Fahrzeuge aus dem Stand heraus in eine beliebige Richtung fahren können.

Eine Detektionseinrichtung auf den Fahrzeugen detektiert die Anwesenheit eines Werkers auf der jeweiligen Montageplattform, und zwar vorzugsweise ortsaufgelöst, wobei die Ortsauflösung weiter vorzugsweise mindestens 50 cm beträgt.

Wenn die Werker ein Identifikationselement tragen, so kann eine am Fahrzeug angeordnete Leseeinrichtung auf dem Identifikationselement gespeicherte Informationen berührungslos lesen.

Die Detektionseinrichtung kann einen berührungsempfindlichen Bodenbelag umfassen, der zumindest einen Teil der Montageplattform überdeckt.

Die Fahrzeuge können zum Bereitstellen der für den Fahrbetrieb erforderlichen Energie einen wiederaufladbaren elektrischen Energiespeicher haben, der während des Fahrens der Fahrzeuge aufgeladen wird.

Die Bearbeitungsstationen können sich zumindest durch die dort angeordneten Werkzeuge und/oder Handhabungsgeräte und/oder Montageroboter voneinander unterscheiden.

Die Fahrzeuge können so gesteuert werden, dass ein erstes Fahrzeug ein zweites Fahrzeug überholt, während sich das zweite Fahrzeug in einer Bearbeitungsstation befindet.

Aufeinanderfolgende Fahrzeuge können sich zumindest zeitweise während des Fahrens berühren und dadurch einen Verband bilden.

Mindestens ein Fahrzeug kann eine für einen Werker auf der Montageplattform zugängliche Eingabeeinrichtung aufweisen, über die der Werker der Steuereinrichtung eine von dem betreffenden Fahrzeug noch anzufahrende Bearbeitungsstation vorgeben kann.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: ein aus dem Stand der Technik bekanntes Fördersystem, bei dem mehrere Fahrzeuge gemeinsam einen Schubverband bilden;
- Figur 2: ein Fördersystem aus dem Stand der Technik, bei dem die Fahrzeuge am Ende eines Schubverbandes eine Kurvenfahrt durchführen und dann an das Ende eines parallelen und sich in der entgegengesetzten Richtung vorwärtsbewegenden Schubverbandes angesetzt werden;
- Figur 3: ein Fördersystem nach dem Stand der Technik, bei dem zum Umsetzen am Ende eines Schubverbands die Fahrzeuge seitlich versetzt werden;
- Figur 4: eine perspektivische Darstellung eines Fahrzeugs eines nicht erfindungsgemäßen Fördersystems, das einen omnidirektionalen Antrieb hat;
- Figur 5: ein Ausführungsbeispiel für ein erfindungsgemäßes Fahrzeug, bei dem die Montageplattform mit einem berührungsempfindlichen Bodenbelag bedeckt ist;
- Figuren 6a-6c: eine Rückansicht auf ein erfindungsgemäßes Fahrzeug, bei dem ein Kraftfahrzeug mithilfe eines Hubantriebs in unterschiedliche Bearbeitungshöhen überführt wird;
- Figur 7: eine schematische Draufsicht auf ein erfindungsgemäßes Fördersystem, bei dem mehrere Fahrzeuge unterschiedliche Abfolgen von Bearbeitungsstationen anfahren;
- Figur 8: eine perspektivische Ansicht mehrerer Fahrzeuge in unterschiedlichen Bearbeitungsstationen;
- Figur 9: eine Rückansicht auf ein Fahrzeug in einer ersten Bearbeitungsstation, in der nur Werker tätig sind;
- Figur 10: eine Rückansicht auf ein Fahrzeug in einer zweiten Bearbeitungsstation, in der nur Roboter tätig sind;
- Figur 11: eine perspektivische Darstellung eines Fahrzeugs gemäß einem anderem Ausführungsbeispiel, bei dem das Fahrzeug in mehrere selbstständig fahrende Untereinheiten aufteilbar ist;
- Figur 12: eine an die Figur 7 angelehnte Darstellung eines Fördersystems, in dem die in der Figur 11 gezeigten Fahrzeuge fahren;
- Figur 13: eine Bearbeitungsstation, die nur von einer Werkstückträgereinheit angefahren wird;
- Figur 14: eine perspektivische Darstellung eines Fahrzeugs, das aus einer größeren Werkstückträgereinheit und einer kürzeren Plattformeinheit zusammengesetzt ist;
- Figur 15: eine perspektivische Darstellung eines Fahrzeugs gemäß einem weiteren Ausführungsbeispiel, bei dem eine Werkstückträgereinheit in seitliche Aussparungen zweier Plattformeinheiten eingreift;
- Figure 16: eine an die Figur 7 angelehnte Darstellung eines Fördersystems gemäß einem weiteren Ausführungsbeispiels, bei dem die Bearbeitungsstationen für die Fahrzeuge innerhalb eines Fertigungsareals innerhalb gewisser Grenzen frei wählbar sind.

### BESCHREIBUNG BEVORZUGTER AUSFÜHRUNGSBEISPIELE

### 1. Stand der Technik: Fahren im Schubverband

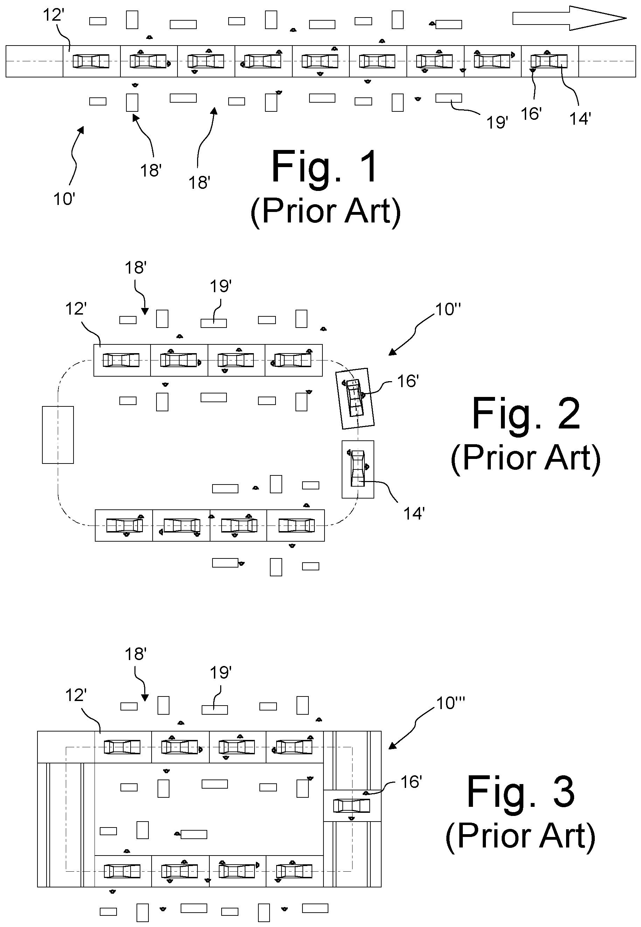

Die Figur 1 zeigt in einer schematischen Draufsicht ein aus dem Stand der Technik bekanntes Fördersystem 10', bei dem mehrere Fahrzeuge 12' entlang einer Fertigungslinie einen Schubverband bilden. Jedes Fahrzeug 12' hat eine Montageplattform, die im dargestellten Ausführungsbeispiel ein Kraftfahrzeug 14' sowie einen oder mehrere Werker 16' trägt. Das Fahrzeug 12', das gesehen in der durch einen Pfeil angedeuteten Förderrichtung ganz hinten fährt, wird von nicht dargestellten Reibrädern angetrieben und schiebt die übrigen Fahrzeuge 12' vor sich her. Zur Fertigungslinie gehören außerdem durch Rechtecke angedeutete Aufbewahrungseinrichtungen 18', in denen zu montierende Teile, Werkzeuge und sonstige Materialien vorgehalten werden.

Am Ende der in der Figur 1 gezeigten Fertigungslinie verlassen die Werker 16' die Montageplattform der Fahrzeuge 12'. Außerdem werden die Kraftfahrzeuge 14' abgenommen und weiteren Bearbeitungsschritten zugeführt. Die leeren Fahrzeuge 12' werden mit Hilfe einer nicht dargestellten Hubeinrichtung in eine andere Förderebene verlagert, in der sie zum Ausgangspunkt zurückbefördert werden.

Die Figuren 2 und 3 zeigen Alternativen, wie im Stand der Technik die Fahrzeuge 12' zum Ausgangspunkt zurückgeführt werden. Bei dem in der Figur 2 gezeigten Fördersystem 10" werden die Fahrzeuge 12' am Ende der Fertigungslinie vereinzelt und in einer Kurvenfahrt um 180° gedreht. In einem benachbarten Abschnitt der Fertigungslinie wird die Bearbeitung und Montage fortgesetzt. Dadurch laufen die Fahrzeuge 12' in einem Kreislauf um, so dass kurze Leerfahrten nur in den Kurvenabschnitten entstehen.

Eine weitere Variante aus dem Stand der Technik ist in der Figur 3 gezeigt. Bei dem dort gezeigten Fördersystem 10‴ werden die Fahrzeuge 12' am Ende der Schubstrecken seitlich versetzt, wozu die Fahrzeuge 12' mit speziellen Fahrwerken versehen sind. Die Fahrzeuge 12' werden dadurch nicht gewendet wie bei dem in der Figur 2 dargestellten Ausführungsbeispiel, sondern weisen immer in die gleiche Richtung.

Bei allen in den Figuren 1 bis 3 gezeigten Fördersystemen wird durch das Fahren im Schubverband eine feste Taktfolge mit festen Taktzeiten vorgegeben. Da sich der Schubverband nur mit einheitlicher Geschwindigkeit vorwärtsbewegen kann, müssen die einzelnen Bearbeitungsschritte zeitlich so unterteilt werden, dass sie in etwa gleich viel Zeit benötigen. Gab es beispielsweise beim Einbau eines Teils Schwierigkeiten, die zu einer Verzögerung geführt haben, so muss der gesamte Schubverband angehalten werden. Das Fahren im Schubverband diktiert somit letztlich den gesamten Fertigungsablauf.

### 2. Aufbau des Fördersystems

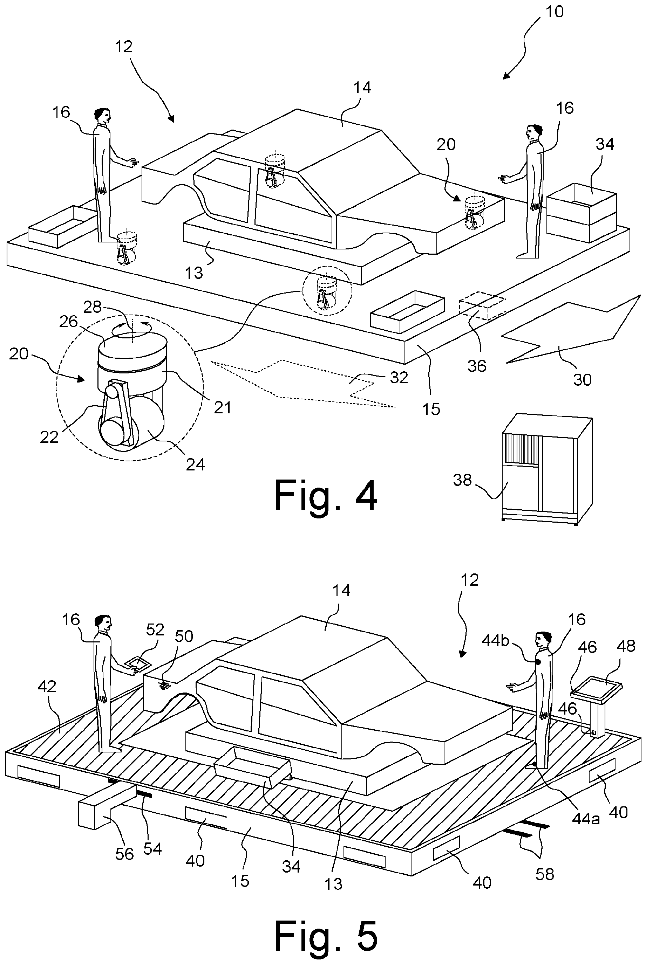

Die Figur 4 zeigt in einer perspektivischen Darstellung ein Fahrzeug 12, das Teil eines nicht erfindungsgemäßen Fördersystems 10 ist. Das Fahrzeug 12 hat eine an sich bekannte Werkstückaufnahme 13, an der ein zu bearbeitendes Werkstück, hier ebenfalls ein noch nicht fertig montiertes Kraftfahrzeug 14, befestigt ist. Zum Fahrzeug 12 gehört ferner eine Montageplattform 15, die für Werker 16 begehbar ist. Das Fahrzeug 12 verfügt außerdem über einen eigenen Antrieb, der im dargestellten Ausführungsbeispiel vier Fahr-Dreh-Module 20 umfasst.

Wie in der vergrößerten Darstellung erkennbar ist, weist jedes Fahr-Dreh-Modul 20 eine Motoreinheit 21 und ein über einen Riemen 22 angetriebenes Antriebsrad 24 auf, die eine Antriebseinheit bilden. Diese Antriebseinheit ist relativ zu einer Halterung 26 um eine vertikale Achse 28 drehbar, wie dies an sich im Stand der Technik bekannt ist. Zur Drehung der Antriebseinheit um die vertikale Achse 28 ist ein weiterer Motor vorgesehen, der in der Figur 4 nicht dargestellt ist. Die Fahr-Dreh-Module 20 sind so in die Montageplattform 15 eingelassen, dass nur die Antriebsräder 24 nach unten vorstehen.

Befinden sich die Antriebseinheiten aller Fahr-Dreh-Module 20 in der in der Figur 4 gezeigten Drehstellung bezüglich ihrer vertikalen Achse 28, so bewegt sich das Fahrzeug 12 beim Drehen der Antriebsräder 24 entlang seiner Längsrichtung, wie dies durch einen Pfeil 30 angedeutet ist. Werden die Antriebseinheiten alle um 90° bezüglich ihrer vertikalen Achse 28 gedreht, so kann das Fahrzeug 12 aus dem Stand heraus, d. h. ohne vorherige Kurvenfahrt, senkrecht zu seiner Längsrichtung 30 fahren, wie dies durch einen gepunkteten Pfeil 32 angedeutet ist. Durch entsprechende Ansteuerung der Fahr-Dreh-Module 20 können auch Drehungen auf der Stelle oder Schrägfahrten realisiert werden.

Auf der Oberseite der Montageplattform 15 finden sich mehrere Behälter 34, in denen zu montierende Teile, andere Materialien oder Werkzeuge bereitgehalten werden, welche die Werker 16 für die Bearbeitung benötigen.

In die Montageplattform 15 integriert ist eine Steuereinheit 36, die mit einer zentralen Steuerungseinrichtung 38 des Fördersystems 10 drahtlos kommuniziert. Die Steuereinheit 36 umfasst ein Navigationssystem, bei dem sich das Fahrzeug 12 in einer Fertigungshalle orientieren kann, und eine Kollisionsvermeidungseinrichtung. Steuereinheiten 36 mit diesen Funktionen sind an und für sich von freifahrenden Transportsystemen (FTS) bekannt, weswegen hierauf an dieser Stelle nicht näher eingegangen wird. Das Fahrzeug 12 ist dadurch in der Lage, sich in einer Fertigungshalle frei zwischen mehreren Bearbeitungsstationen zu bewegen. Vorzugsweise ist das Fahrzeug 12 bei solchen Fahrten nicht an eine vorgegebene Spur gebunden. Im Prinzip kommen aber auch Steuerungen in Frage, bei denen die Fahrzeuge 12 sich entlang vorgegebener Fahrwege bewegen, die durch im Boden verlegte Leiterbahnen o.ä. vorgegeben sind.

Die Figur 5 zeigt in einer an die Figur 4 angelehnten Darstellung ein erfindungsgemäßes Ausführungsbeispiel für ein Fahrzeug 12. An den Front- und Seitenflächen der Montageplattform 15 sind Sensoren 40 angeordnet, die der Orientierung und/oder der Kollisionsvermeidung dienen. Die Sensoren 40 können beispielsweise als Laserscanner oder als Ultraschallsensoren ausgebildet sein.

Die Oberseite der Montageplattform 15 ist von einem berührungsempfindlichen Bodenbelag 42 bedeckt, mit dem sich ortsaufgelöst erfassen lässt, wo sich die Werker 16 zu einem gegebenen Zeitpunkt auf der Montageplattform 15 befinden. Derartige berührungsempfindliche Bodenbeläge sind an sich aus dem Stand der Technik bekannt (vgl. etwa DE 10 2006 007 780 A1) und ermöglichen es, den Ort eines Werkers 16 auf dem Montageplattform 15 mit einer Ortsauflösung von weniger als 50 cm zu detektieren. Durch Verwendung von Druckerfassungszellen, wie sie etwa aus der DE 10 2011 105 595 A1 bekannt sind, lässt sich auch der von den Werkern 16 auf den Bodenbelag 42 ausgeübte Druck erfassen.

Dadurch können Positionen der Werker 16 von den Positionen anderer Gegenstände (z. B. einem Behälter 34), die sich auf der Montageplattform 15 befinden, unterschieden werden. In der Figur 5 ist rechts ein Werker 16 gezeigt, der zwei Identifikationselemente 44a, 44b mit sich trägt. Die Identifikationselemente 44a, 44b können beispielsweise in die Schuhsohle eines Schuhs oder in die Tasche einer Jacke eingearbeitet und als RFID-Transponder ausgebildet sein. Mit Hilfe von Lesegeräten 46, die an verschiedenen Orten am Fahrzeug 12 angeordnet sein können, lassen sich die im Identifikationselement 44a, 44b gespeicherten Identifikationsinformationen auslesen. Im Zusammenwirken mit dem berührungsempfindlichen Bodenbelag 42 besitzt die Steuereinheit 36 dann nicht nur Kenntnis darüber, an welchem Ort sich Werker 16 auf der Montageplattform 15 befinden, sondern auch wer die Werker 16 sind. Dies kann beispielsweise dazu genutzt werden, die weitere Bearbeitung oder ein Anfahren des Fahrzeugs 12 erst dann zuzulassen, wenn sich der oder die dafür vorgesehenen Werker 16 auf der Montageplattform 15 befinden.

Mit Hilfe eines berührungsempfindlichen Bildschirms 48 können die Werker 16 direkt in die Steuerung des Fahrzeugs 12 eingreifen. Neben Funktionen wie Nothalt oder Langsamfahrt können auch neue Ziele vorgegeben werden. Stellt ein Werker 16 beispielsweise fest, dass am Kraftfahrzeug 14 ein bei 50 angedeuteter Defekt vorhanden ist, so kann der Werker über den berührungsempfindlichen Bildschirm 48 der Steuerungseinrichtung 38 mitteilen, dass eine bestimmte Bearbeitungsstation nochmals anzufahren ist. Der vorausgeplante Fahrweg des Fahrzeugs 12 wird dann entsprechend umdisponiert, was auch Eingriffe in die Fahrwege der übrigen Fahrzeuge 12 nach sich ziehen kann. Das Fahrzeug 12 mit dem betroffenen Kraftfahrzeug 14 kann dann beispielsweise seitlich herausgefahren werden und rückwärts fahren, um eine bestimmte Bearbeitungsstation nochmals anzufahren. Wenn der Werker 16 dies wünscht, kann auch eine Bearbeitungsstation angefahren werden, die speziell für die Nachbearbeitung ausgelegt ist. Die Entscheidung darüber, welche Bearbeitungsstation im Falle eines Defekts am Kraftfahrzeug 14 angefahren werden soll, kann auch die zentrale Steuerungseinrichtung 38 oder ein für die Fertigung zuständiger Fertigungsfachmann treffen.

Anstelle eines fest installierten berührungsempfindlichen Bildschirms 48 kann auch eine mobile Eingabeeinrichtung 52 verwendet werden, um der zentralen Steuerungseinrichtung 38 bestimmte Informationen, z. B. ein neues Fahrziel, zu übermitteln. Selbstverständlich kann diese Kommunikation bidirektional erfolgen, so dass dem Werker 16 beispielsweise angezeigt werden kann, ob die gewünschte Bearbeitungsstation sofort angefahren werden kann oder dies erst zu einem späteren Zeitpunkt möglich ist.

Die Fahr-Dreh-Module 20 des Fahrzeugs 12 werden im dargestellten Ausführungsbeispiel von einem Akkumulator mit elektrischer Energie versorgt. Zum Aufladen des Akkumulators weist die Montageplattform 15 seitliche Schleifkontakte 54 auf, an die in einer bestimmten Ladeposition des Fahrzeugs 12 ein Gegenkontakt 56 zur Anlage gebracht wird. Über die Schleifkontakte 54 kann der Akkumulator dann im Stehen aufgeladen werden.

Das Fahrzeug 12 verfügt auch über die Möglichkeit, während des Fahrens den Akkumulator elektrisch zu laden. Hierzu sind am Boden der Fertigungshalle streifenförmige Ladekontakte 58 eingelassen, die an entsprechenden Gegenkontakten des Fahrzeugs 12 anliegen. Besonders bei Fertigungen, bei den die Fahrzeuge 12 sehr häufig in Bewegung sind, lassen sich dadurch Standzeiten der Fahrzeuge 12 infolge der erforderlichen Ladevorgänge reduzieren oder sogar vollständig vermeiden.

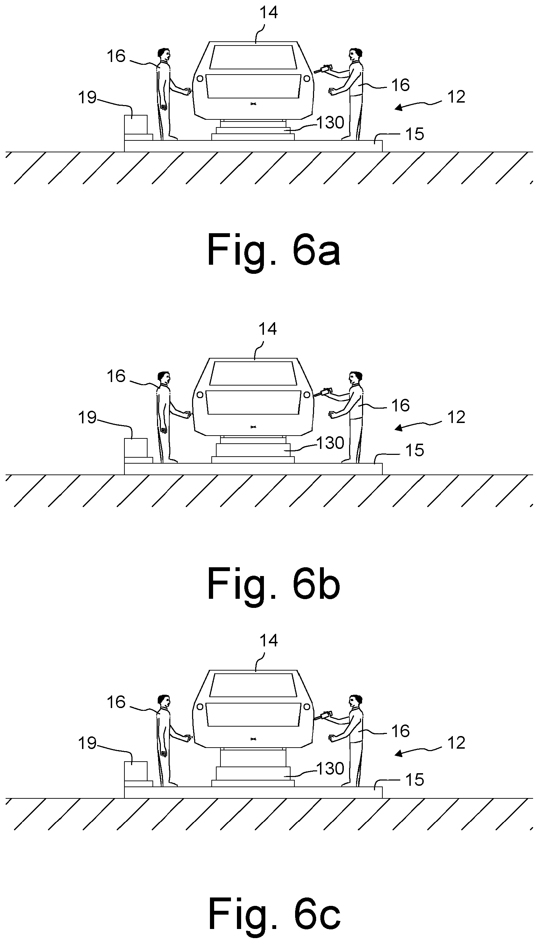

Die Werkstückaufnahme der Fahrzeuge 12 kann auch als Hubtisch 130 ausgebildet sein, wie dies die Figuren 6a bis 6c in einer Rückansicht auf ein Fahrzeug 12 für unterschiedliche Hubhöhen illustrieren. Dadurch lässt sich das Kraftfahrzeug 14 in unterschiedlichen Höhen über der Montageplattform 15 positionieren, so dass die Werker 16 alle erforderlichen Bearbeitungsschritte bequem im Stehen durchführen können.

### 3. Funktion

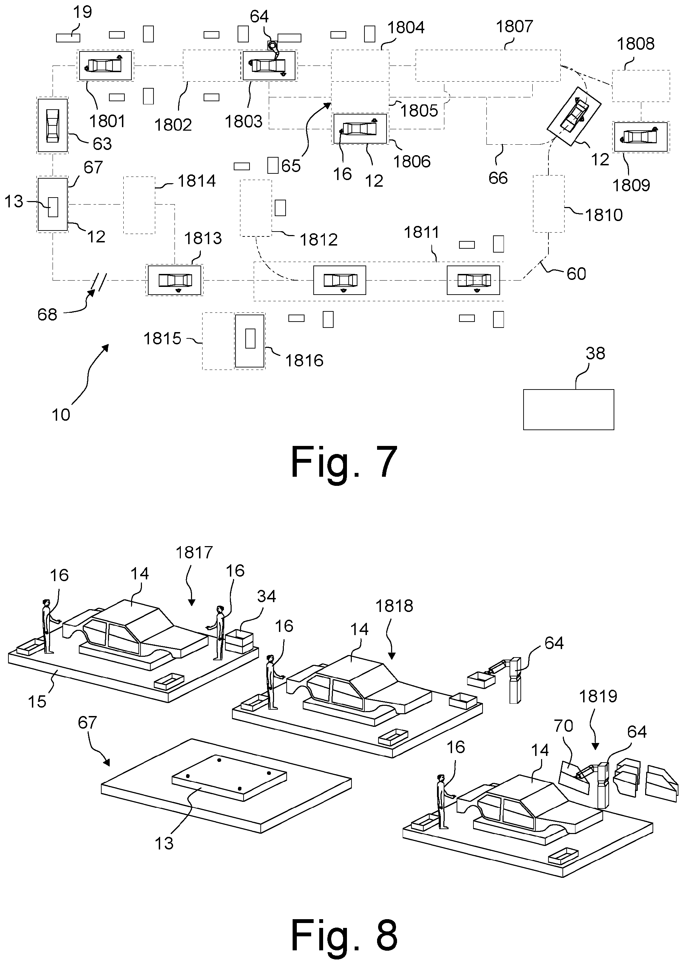

Die Figur 7 zeigt in einer schematischen Draufsicht ein erfindungsgemäßes Fördersystem 10, in dem mehrere Fahrzeuge sowie mehrere, mit gestrichelten Linien angedeutete Bearbeitungsstationen 1801 bis 1816 erkennbar sind. In vielen Bearbeitungsstationen 1801 bis 1816 befinden sich Fahrzeuge 12; am rechten Rand der Figur 7 ist ein Fahrzeug 12 während einer Kurvenfahrt zwischen zwei Bearbeitungsstationen 1807 und 1810 erkennbar.

Die Fahrzeuge fahren im dargestellten Ausführungsbeispiel auf einem Fahrwegnetz 60, in dem sie sich mit Hilfe von Navigationseinrichtungen wie zum Beispiel funkbasierten Navigationssystemen, Laserscannern, Kameras oder Ultraschallsensoren orientieren.

Links ist in der Figur 7 ist eine Aufnahmestation 63 gezeigt, in der die Kraftfahrzeuge 14 auf die Werkstückaufnahme 13 eines bereitstehenden Fahrzeugs 12 aufgesetzt wird. Die Werker 16 betreten das Fahrzeug 12 jedoch erst, nachdem dieses die erste links oben in der Figur 7 gezeigte Bearbeitungsstation 1801 erreicht hat. Das Fahrzeug 12 bleibt in dieser ersten Bearbeitungsstation so lange stehen, bis die dort vorgesehene Bearbeitung abgeschlossen ist. Die Werker können dies durch ein "Fertig"-Signal am berührungsempfindlichen Bildschirm 48 signalisieren. Alternativ hierzu kann auch ein fester Takt vorgegeben sein, nach dessen Ende das Fahrzeug 12 aus der ersten Bearbeitungsstation 18 herausfährt. Die Werker 16 können nun auf dem Fahrzeug 12 verbleiben und die Bearbeitung fortsetzen, während es zur nächsten Bearbeitungsstation 1802 vorrückt.

Bei der dritten Bearbeitungsstation 1803 unterstützt ein Roboter 64 die Bearbeitung. Die Werker 16 müssen sich nun ausreichend weit weg vom Roboter 64 befinden, damit sie nicht durch die Bewegungen des Roboterarms gefährdet werden. Der Roboter 64 wird so von der zentralen Steuereinrichtung 38 gesteuert, dass er seine Bearbeitung erst dann aufnimmt, wenn die beiden Werker 16 einen ausreichend großen Abstand zum Roboter 64 hergestellt haben. Dies wird der zentralen Steuerungseinrichtung 38 vom berührungsempfindlichen Bodenbelag 42 des Fahrzeugs 12 signalisiert.

Die dritte Bearbeitungsstation 1803 befindet sich am Eingang eines Parallelbereichs 65, der drei zueinander parallele Bearbeitungsstationen 1804, 1805 und 1806 umfasst. In diesen Bearbeitungsstationen werden Bearbeitungsschritte vorgenommen, die nicht bei allen Kraftfahrzeugen 14 erforderlich sind. In einer der drei parallelen Bearbeitungsstationen kann beispielsweise ein Schiebedach montiert werden, während in einer anderen eine Dachreling aufgesetzt wird. Je nachdem, wie das zu fertigende Kraftfahrzeug 14 konfiguriert ist, fährt das Fahrzeug 12 ausgehend von der dritten Bearbeitungsstation 1803 eine der drei parallelen Bearbeitungsstationen 1804, 1805 oder 1806 an. Zum Anfahren der Bearbeitungsstationen 1805, 1806 wird das Fahrzeug 12 um eine vorgegebene Distanz seitlich versetzt, wozu die Motoreinheiten 21 der Fahr-Dreh-Module 20 in der oben beschriebenen Weise um 90° bezüglich der vertikalen Achse 28 gedreht und dann wieder in ihre ursprüngliche Stellung zurückgestellt werden.

In die darauf folgende Bearbeitungsstation 1807 können mehrere Fahrzeuge 12 einfahren und gleichzeitig bearbeitet werden. Auch dort ist allerdings vorgesehen, dass die Fahrzeuge keinen Schubverband bilden, sondern vereinzelt bleiben. In der Bearbeitungsstation 1807 können die einzelnen Fahrzeuge 12 während der Bearbeitung entweder mit langsamer Geschwindigkeit ihre Fahrt fortsetzen ("on-the-fly" Bearbeitung) oder an einer geeigneten Position stehenbleiben.

Sollte bei einem Kraftfahrzeug 14 die Bearbeitung in einer Bearbeitungsstation unerwartet lange dauern, so kann das Fahrzeug, welches das betreffende Kraftfahrzeug transportiert, den Bearbeitungsbereich 1807 verlassen und über eine Rücklaufstrecke 66 erneut dem Bearbeitungsbereich 1807 zugeführt werden. Dadurch müssen darauf folgende Fahrzeuge 12 nicht auf den Abschluss der Bearbeitung eines Kraftfahrzeugs 14 warten, das von einem vorausfahrenden Fahrzeug 12 transportiert wird. Das Fahrzeug 12 lässt somit die darauf folgenden Fahrzeuge 12 überholen, indem es in die Rücklaufstrecke 66 einschert und sich dann wieder durch seitliches Versetzen in den Bearbeitungsbereich 187 einfügt.

Rechts in der Figur 7 sind zwei Bearbeitungsstationen 1808, 1809 erkennbar, die einer Nachbearbeitung dienen. Diese Bearbeitungsstationen 1808, 1809 werden nur von solchen Fahrzeugen 12 angefahren, bei denen die Werker 16 festgestellt haben, dass das Kraftfahrzeug 14 einen Defekt 50 aufweist. Wie oben bereits erwähnt, informieren die Werker 16 die zentrale Steuerungseinrichtung 38 hierüber mit Hilfe des berührungsempfindlichen Bildschirms 48 und der mobilen Eingabeeinrichtung 52. Die für die Nachbearbeitung vorgesehenen Bearbeitungsstationen 1808, 1809 ermöglichen es somit, Nachbearbeitungen vorzunehmen, ohne dass nachfolgende Fahrzeuge 12 warten müssen.

Die darauf folgenden Bearbeitungsstationen 1810 und 1811 werden wieder von allen Fahrzeugen 12 angefahren. Die Bearbeitungsstation 1812 hingegen ist nur über eine Kurvenfahrt erreichbar und wird nur von bestimmten Fahrzeugen 12 angefahren und nach der Bearbeitung wieder rückwärts verlassen.

Darauf folgt die Bearbeitungsstation 1813, von wo aus die Fahrzeuge 12 entweder direkt oder über eine Bearbeitungsstation 1814 an eine Abgabestation 67 fahren, in der das Kraftfahrzeug 14 abgenommen wird. Mit zwei schräg gestellten Strichen ist in der Figur 7 eine Blockade 68 angedeutet, die sich auf der direkten Wegstrecke zwischen der Bearbeitungsstation 1813 und der Abgabestation 67 befindet. Die Fahrzeuge 12 können deswegen diesen Teil des mit 60 angedeuteten Fahrwegnetzes 60 nicht nutzen. Deswegen werden alle Fahrzeuge 12 ausnahmsweise über die Bearbeitungsstation 1814 geführt.

Unten in der Figur 7 sind noch zwei weitere Bearbeitungsstationen 1815 und 1816 angedeutet. Diese Bearbeitungsstationen 1815, 1816 dienen allerdings nicht der Bearbeitung der Kraftfahrzeuge 14, sondern stellen Reparaturstationen für die Fahrzeuge 12 dar. Falls Reparaturbedarf besteht, können die Fahrzeuge 12 nach dem Entladen an der Abgabestation 67 zu den Bearbeitungsstationen 1815, 1816 fahren und dort gewartet oder repariert werden.

Die Figur 8 zeigt eine Anordnung mehrerer dicht benachbarter Bearbeitungsstationen 1817 bis 1819 in einer perspektivischen Darstellung. In der Bearbeitungsstation 1817 befinden sich zwei Werker 16 auf der Montageplattform 15 und montieren am Kraftfahrzeug 14 Teile, die in den Behältern 34 bereitgehalten werden.

In der Bearbeitungsstation 1818 befindet sich nur ein Werker 16 auf der Montageplattform. Ein Roboter 64 tauscht während der Bearbeitung durch den Werker 16 einen leeren Behälter 34 gegen einen vollen Behälter aus oder stellt zu verbauende Teile bereit.

Bei der Bearbeitungsstation 1819 befindet sich ebenfalls nur ein Werker 16 auf der Montageplattform 15. Der Roboter 64 dient hier dazu, Kraftfahrzeugtüren 70 an dem Kraftfahrzeug 14 zu montieren.

Links unten ist die Abgabestation 67 gezeigt, in der die Kraftfahrzeuge 14 von den Fahrzeugen 12 abgenommen werden.

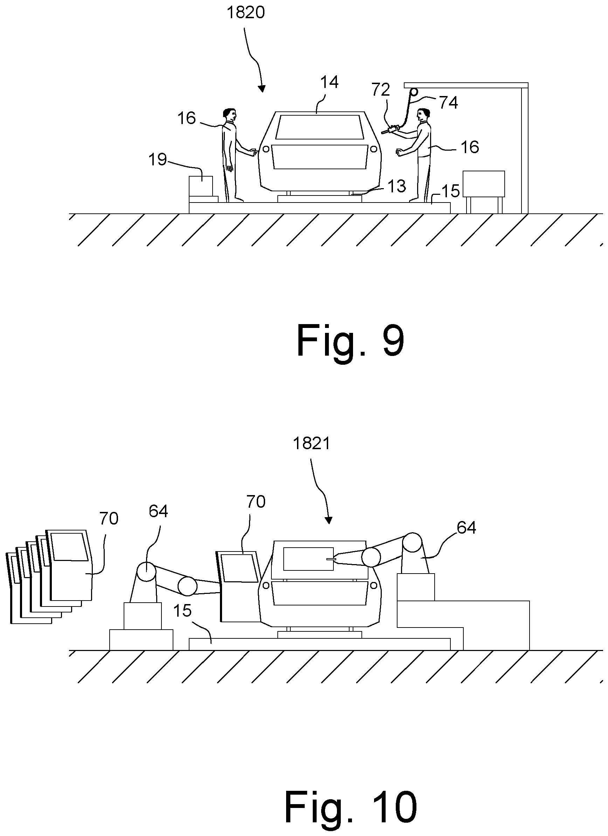

Die Figur 9 zeigt in einer Rückansicht eine Bearbeitungsstation 1820, in der sich zwei Werker 16 auf der Montageplattform 15 befinden. An dieser Bearbeitungsstation 1820 befindet sich ein Werkzeug 72, das über ein Kabel 74 mit Strom versorgt wird.

Die Figur 10 zeigt in einer Rückansicht eine andere Bearbeitungsstation 1821, bei der die Bearbeitung vollständig von Robotern 64 durchgeführt wird. Der links dargestellte Roboter 64 setzt bei diesem Ausführungsbeispiel Kraftfahrzeugtüren 70 ein, während der rechts dargestellte Roboter 64 ein rechteckiges Element im Heckbereich des Kraftfahrzeuges 14 einfügt. Bei dieser vollautomatischen Bearbeitung dürfen sich aus Sicherheitsgründen keine Werker 16 auf der Montageplattform 15 befinden. Man erkennt, dass ein Fuß des rechts dargestellten Roboters 64 die Montageplattform 15 weit übergreift, wodurch ein Werker akut gefährdet würde.

### 4. Weitere Ausführungsbeispiele

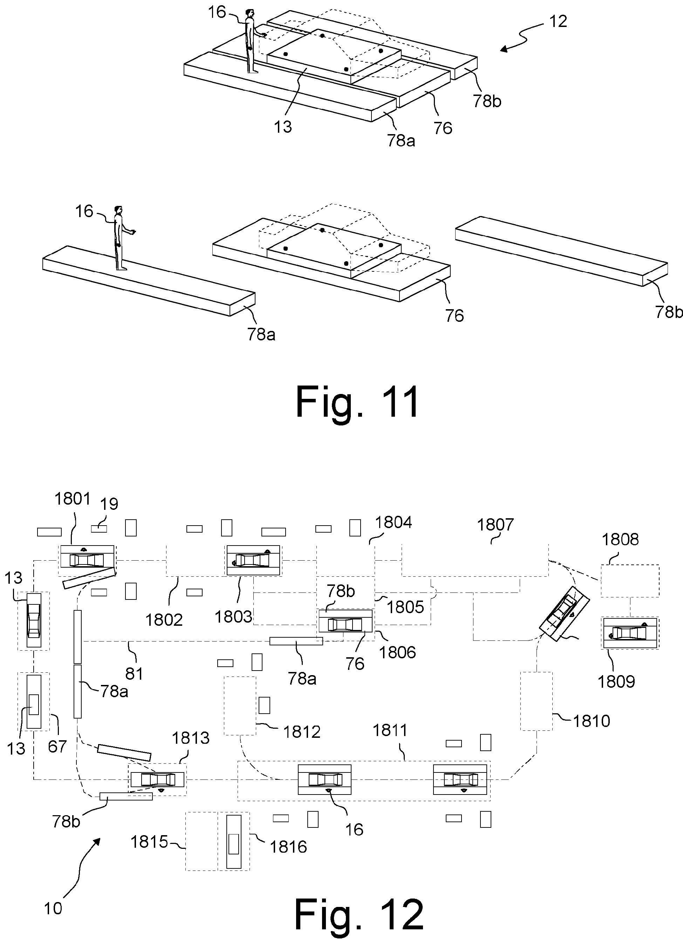

Die Figur 11 zeigt in einer perspektivischen Darstellung ein Fahrzeug 12, das aus mehreren Untereinheiten zusammengesetzt ist. Bei diesen Untereinheiten handelt es sich im dargestellten Ausführungsbeispiel um eine in der Mitte des Fahrzeugs 12 angeordnete Werkstückträgereinheit 76, welche die Werkstückaufnahme 13 trägt, und um zwei für die Werker 16 begehbare Plattformeinheiten 78a, 78b, die jeweils an eine Längsseite der Werkstückträgereinheit 76 angekuppelt sind. Die Werkstückträgereinheit 76 sowie die beiden Plattformeinheiten 78a, 78b haben jeweils ein eigenes Fahrwerk und einen eigenen Antrieb, so dass die drei Untereinheiten unabhängig voneinander fahren können.

Unten in der Figur 11 sind die drei Untereinheiten 76, 78a, 78b getrennt voneinander gezeigt. Man erkennt, dass bei dem dargestellten Ausführungsbeispiel die drei Untereinheiten über keinerlei mechanische Kupplungen verfügen, mit denen sie entlang ihrer Längsseiten aneinander gekuppelt werden können. Die Kupplung erfolgt hier auf rein elektrischregelungstechnischem Wege. Die Untereinheiten werden hierzu so angesteuert, dass sie in dichtem Abstand nebeneinander herfahren. Wie man oben in der Figur 11 erkennt, ist der Spalt zwischen den Untereinheiten 76, 78a, 78b so schmal, dass er für die Werker 16 keine Gefahr darstellt. Damit die Spalte zwischen den Untereinheiten während des Betriebs eine annähernd konstante Breite haben, weisen die Untereinheiten an ihren Längsseiten Abstandssensoren auf, die Teil eines Regelkreises sind, der die Einhaltung der Spaltbreite sicherstellt.

Insbesondere ist es möglich, dass die drei Untereinheiten nach dem Prinzip der Überordnung/Unterordnung gesteuert werden. Dies bedeutet, dass einer der Untereinheiten, zum Beispiel der Werkstückträgereinheit 76, die Rolle einer übergeordneten Einheit zugewiesen wird. Die übergeordnete Einheit wird genauso gesteuert, wie dies im Zusammenhang mit den weiter oben beschriebenen Ausführungsbeispielen für die Fahrzeuge 12 erläutert wurde. Zu diesem Zweck kann die übergeordnete Einheit insbesondere über Mittel zur Navigation und Kollisionsvermeidung verfügen. Die beiden anderen Untereinheiten, hier die Plattformeinheiten 78a, 78b, werden als untergeordnete Einheiten betrieben. Dies bedeutet, dass sie das Fahrziel nicht unabhängig von der übergeordneten Einheit anfahren, sondern der übergeordneten Einheit folgen. Die untergeordneten Einheiten verfügen zu diesem Zweck über die bereits erwähnten Abstandssensoren und eine geeignete Regelelektronik, die gewährleistet, dass sie neben der Werkstückaufnahmeeinheit 76 herfahren, ohne ihre Relativposition zu der Werkstückträgereinheit 76 dabei nennenswert zu verändern.

In Betracht kommt selbstverständlich auch, die Untereinheiten mechanisch miteinander zu kuppeln. In der Regel genügt es dann, wenn lediglich der Antrieb einer der drei Untereinheiten betätigt wird.

Um das in der Figur 11 oben gezeigte Fahrzeug 12 zu bilden, kann die übergeordnete Einheit - hier die Werkstückträgereinheit 76 - ein Anforderungskommando an die Steuerungseinrichtung 38 senden. Diese ermittelt, welche Plattformeinheiten verfügbar sind, und weist die ausgewählten Plattformeinheiten an, selbsttätig zur Werkstückträgereinheit 76 zu fahren. Sobald die beiden Plattformeinheiten 78a, 78b ihre richtige Position relativ zur Werkstückträgereinheit 76 eingenommen haben, wird auf das Prinzip der der Überordnung/Unterordnung umgestellt, in dem die Plattformeinheiten 78a, 78b der Werkstückträgereinheit 76 folgen.

Die Figur 12 zeigt in einer an die Figur 7 angelehnten Darstellung ein Fördersystem 10, bei dem die Fahrzeuge 12 in der in der Figur 11 gezeigten Weise aus drei Untereinheiten aufgebaut sind. Man erkennt, dass in der Verarbeitungsstation 1806 die in Fahrtrichtung gesehen rechte Plattformeinheit 78a abgekoppelt wurde. Dadurch ist die rechte Seite des Kraftfahrzeugs 14 so freigelegt, dass dort eine Bearbeitung im unteren Bereich des Kraftfahrzeugs 14 vorgenommen werden kann, ohne dass das Kraftfahrzeug 14 vorher mit Hilfe einer Hubvorrichtung angehoben werden muss. Die abgekuppelte Plattformeinheit 78a wird entlang einer Rückfahrstrecke 81 zurückgeführt, in eine Warteschlange eingliedert und an eine andere Fahrzeug Werkstückträgereinheit 76 angekuppelt, das zu einem späteren Zeitpunkt die Bearbeitungsstationen 1801 bis 1813 durchfährt.

Das Fahrzeug 12, dessen rechte Plattformeinheit 78a in der Bearbeitungsstation 1806 abgekoppelt wurde, durchfährt die übrigen Bearbeitungsstationen nur noch mit der Werkstückträgereinheit 76 und der an die linke Seite angekuppelte 78b. Andere Fahrzeuge, die nicht die Bearbeitungsstation 1806 anfahren, bleiben hingegen während des gesamten in der Figur 12 dargestellten Bearbeitungsprozesses vollständig. Erst am Ende des Bearbeitungsprozesses werden beide Plattformeinheiten 78a, 78b abgekoppelt, wie dies links unten in der Bearbeitungsstation 1813 dargestellt ist. In die Abgabestation 67 und die Aufnahmestation 63 fahren deswegen nur die Werkstückträgereinheit 76 ohne Plattformeinheiten 78a, 78b ein.

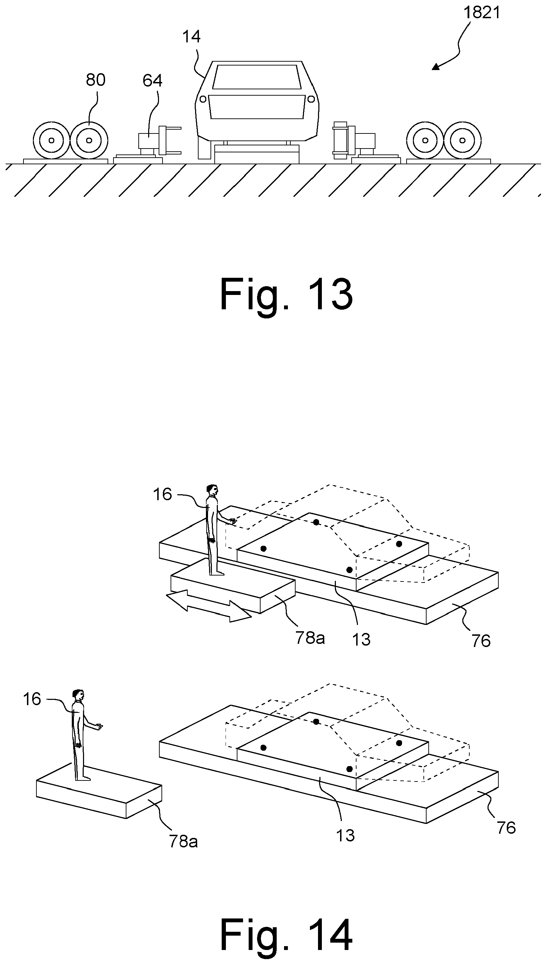

Die Figur 13 zeigt eine Rückansicht einer Bearbeitungsstation 1821, wobei beide Plattformeinheiten 78a, 78b vom Fahrzeug 12 abgekoppelt wurden. Das Kraftfahrzeug 14 wird deswegen nur noch von der Werkstückträgereinheit 76 transportiert. Auf diese Weise sind die Radausschnitte des Kraftfahrzeugs 14 frei zugänglich, so dass Montageroboter 64 die bereitgestellten Räder 80 problemlos an den Achsen des Kraftfahrzeugs 14 befestigen können.

Die Figur 14 zeigt eine Variante, bei dem nur eine Plattformeinheit 78a vorgesehen ist, die in Längsrichtung des Fahrzeugs 12 kürzer als die Werkstückträgereinheit 76 ist. Wenn sich die beiden Untereinheiten 76, 78b im Betrieb der Überordnung/Unterordnung befinden, kann die Plattformeinheit 78b so gesteuert werden, dass sie sich an der Werkstückträgereinheit 76 in dichtem Abstand vorbeibewegt, wie dies in der Figur 14 durch einen Doppelpfeil angedeutet ist. Diese Relativbewegung ist auch dann möglich, wenn die Werkstückträgereinheit 76 in Bewegung ist. Ein sich auf der Plattformeinheit 78a befindender Werker 16 wird auf diese Weise gleichmäßig oder mit einem gewünschten Geschwindigkeitsverlauf am Kraftfahrzeug 14 vorbeigeführt. Er kann auf diese Weise Bearbeitungsschritte an dem Kraftfahrzeug 14 vornehmen, die sich nur schwer bewerkstelligen lassen, wenn der Werker 16 diese Relativbewegung selbst ausführen muss. Der Werker 16 kann zum Beispiel kniend auf der Plattform 78a an der Werkstückträgereinheit 76 vorbeifahren, um eine tiefliegende Zierleiste o. ä. an der Karosserie anzubringen.

Selbstverständlich ist eine solche Relativbewegung auch dann möglich, wenn die Plattformeinheiten 78a, 78b nicht kürzer als die Werkstückträgereinheit 76 sind. Dann verändert sich jedoch während der Relativbewegung die gesamte Länge des Fahrzeugs 12, was insgesamt einen größeren Platzbedarf erfordert.

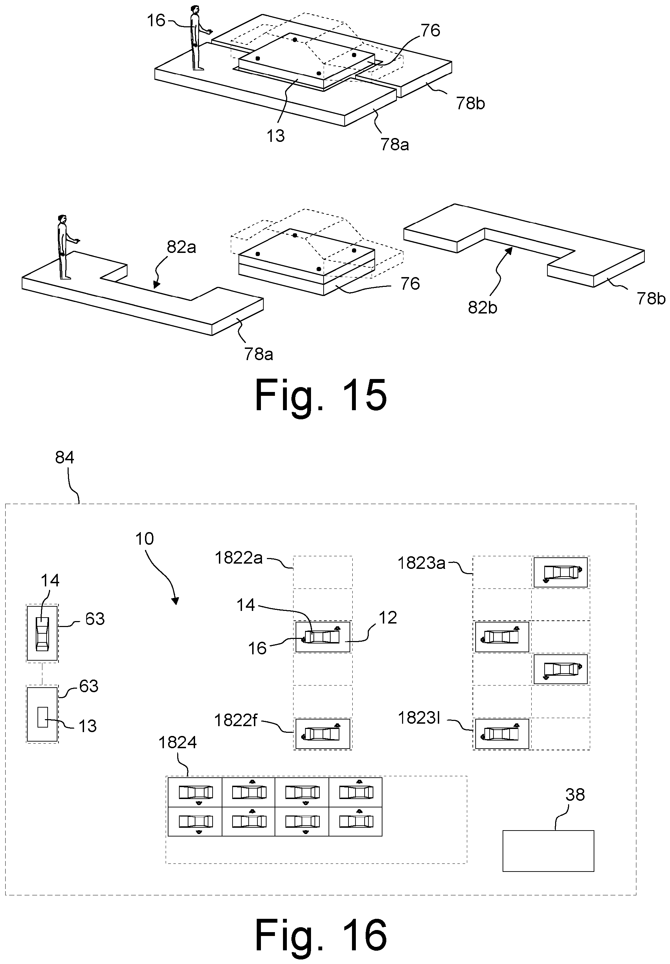

In der Figur 15 ist in einer an die Figur 11 angelehnten Darstellung eine weitere Variante gezeigt, bei der die beiden Plattformeinheiten 78a, 78b jeweils eine seitliche Ausnehmung 82a bzw. 82b aufweisen. Die Form der Ausnehmungen 82a, 82b ist so gewählt, dass die mittig angeordnete Werkstückträgereinheit 76 darin seitlich eingefügt werden kann. Auf diese Weise wird ein Formschluss zwischen der Werkstückträgereinheit 76 und den beiden benachbarten Plattformeinheiten 78a, 78b erzielt, wodurch die Stabilität der Montageplattform erhöht wird. Insbesondere ist es möglich, entweder die Trägereinheit 76 oder die beiden Plattformeinheiten 78a, 78b ohne eigenen Antrieb auszuführen. Durch die formschlüssige Verbindung zwischen den Untereinheiten kann also entweder die Werkstückträgereinheit 76 als übergeordnete Einheit die beiden nicht angetriebenen Plattformeinheiten 78a, 78b mitführen, oder umgekehrt führen die beiden untergeordneten Einheiten 78a, 78b die dazwischen aufgenommene Werkstückträgereinheit 76 mit.

Die Figur 16 zeigt in einer an die Figur 7 angelehnten Darstellung ein Fördersystem 10 gemäß einem anderen Ausführungsbeispiel, bei dem die Bearbeitungsstationen sich nicht mehr an dauerhaft fest vorgegebenen Orten innerhalb eines Fertigungsareals 84 befinden, sondern innerhalb eines vorgegebenen Fertigungsareals 84 in gewissen Grenzen variabel verteilt werden können. Diese Grenzen werden insbesondere durch die nicht veränderbare Gebäudeinfrastruktur, etwa die Lage von Versorgungsanschlüssen oder von ortsfesten Fördersystemen wie Hängebahnen, gesetzt.

In der Figur 16 sind links die Aufnahmestation 63 und die Abgabestation 67 dargestellt, in denen das Kraftfahrzeug 14 aufgenommen bzw. abgegeben wird. In der Mitte der Figur 16 ist eine erste Gruppe von Bearbeitungsstationen 1822a bis 1822f gezeigt, in denen unterschiedliche Bearbeitungsschritte durchgeführt werden. Diese Bearbeitungsschritte können so ausgewählt sein, dass sie sich gegenseitig ausschließen, zum Beispiel die Montage eines Faltdaches in der Bearbeitungsstation 1822a und die Montage eines elektrischen Schiebedachs in der Bearbeitungsstation 1822b. Die Infrastruktur für die einzelnen Bearbeitungsstationen 1822a, die in der Figur 16 nicht dargestellt ist, ist vorzugsweise ebenfalls auf Fahrzeugen verfahrbar und wird den Bearbeitungsstationen geeignet zugestellt. Eine ähnliche Gruppe mit mehreren Bearbeitungsstationen 1823a bis 1823l ist weiter rechts in der Figur 16 dargestellt. Extra keine Fahrstrecken, weil Fahrzeuge sich den Weg selbst frei wählen.

Am unteren Rand des Fertigungsareals 84 befindet sich eine Bearbeitungsstation 1824, die einheitlich in dem Sinne ist, dass an allen Orten die gleichen Bearbeitungsschritte vorgenommen werden. Auch diese Bearbeitungsstation 1824 ist jedoch räumlich verlagerbar oder in ihrer Größe veränderbar.

Durch diese mobilen Bearbeitungsstationen 1822 bis 1824 ist es möglich, flexibel auf sich verändernde Anforderungen im Fertigungsablauf zu reagieren. Werden beispielsweise weniger Kraftfahrzeuge mit Schiebedach und mehr Kraftfahrzeuge mit Faltdach benötigt, so können Bearbeitungsstationen für die Montage eines Schiebedachs in Bearbeitungsstationen für die Montage eines Faltdachs umgewandelt werden. Werden keine Fahrzeuge mit Schiebdach mehr gefertigt, so können die betreffenden Bearbeitungsstationen abgebaut und die übrigen Bearbeitungsstationen bei Bedarf verlagert werden, um freie Fahrwege zwischen den Bearbeitungsstationen zu schaffen.

## Patentansprüche

1. Fördersystem (10) zum gleichzeitigen Transport von Werkstücken (14) und Werkern (16), mit
mehreren Fahrzeugen (12), die jeweils eine Werkstückaufnahme (13), eine für Werker (16) begehbare Montageplattform (15) und einen eigenen Antrieb (20) haben, der dazu eingerichtet ist, das jeweilige Fahrzeug (12) unabhängig von anderen Fahrzeugen des Fördersystems (10) anzutreiben,
mehreren Bearbeitungsstationen (1801 bis 1816), die zur Durchführung unterschiedlicher Bearbeitungsschritte eingerichtet sind, und mit
einer Steuerungseinrichtung (38) zur Steuerung der Fahrzeuge (12),
wobei
die Steuerungseinrichtung (38) dazu eingerichtet ist, die Fahrzeuge (12) so zu steuern, dass sie in Abhängigkeit von dem transportierten Werkstück (14) individuell unterschiedliche Abfolgen von Bearbeitungsstationen (1801 bis 1824) abfahren,
**dadurch gekennzeichnet, dass**
die Fahrzeuge (12) jeweils eine Detektionseinrichtung (42) haben, die dazu eingerichtet ist, die Anwesenheit eines Werkers (16) auf der jeweiligen Montageplattform (15) zu detektieren.

2. Fördersystem nach Anspruch 1, **dadurch gekennzeichnet, dass** zumindest einige der Bearbeitungsstationen (1801 bis 1824) so verteilt angeordnet sind, dass sie nur durch eine Seitwärts- oder Kurvenfahrt, aber ohne Fahrtrichtungsumkehr von den Fahrzeugen (12) angefahren werden können.

3. Fördersystem nach Anspruch 1 oder 2, **dadurch gekennzeichnet, dass** die Fahrzeuge (12) jeweils einen omnidirektionalen Antrieb (20) haben, mit dem die Fahrzeuge (12) aus dem Stand heraus in eine beliebige Richtung fahren können.

4. Fördersystem nach Anspruch 1, **dadurch gekennzeichnet, dass** die Detektionseinrichtung (42) dazu eingerichtet ist, den Ort eines Werkers (16) auf der jeweiligen Montageplattform (15) zu detektieren.

5. Fördersystem nach Anspruch 4, **dadurch gekennzeichnet, dass** die Detektionseinrichtung (42) dazu eingerichtet ist, den Ort eines Werkers (16) auf der jeweiligen Montageplattform (15) mit einer Ortsauflösung von mindestens 50 cm zu detektieren.

6. Fördersystem nach einem der vorhergehenden Ansprüche, **dadurch gekennzeichnet, dass** die Detektionseinrichtung einen vom Werker zu tragendes Identifikationselement (44a, 44b) und eine am Fahrzeug (12) angeordnete Leseeinrichtung (46) umfasst, die dazu eingerichtet ist, auf dem Identifikationselement gespeicherte Informationen berührungslos zu lesen.

7. Fördersystem nach einem der vorhergehenden Ansprüche, **dadurch gekennzeichnet, dass** die Detektionseinrichtung einen berührungsempfindlichen Bodenbelag (42) umfasst, der zumindest einen Teil der Montageplattform (15) überdeckt.

8. Fördersystem nach einem der vorhergehenden Ansprüche, **dadurch gekennzeichnet, dass** die Steuerungseinrichtung (38) dazu eingerichtet ist, die Fahrzeuge (12) so zu steuern, dass ein erstes Fahrzeug ein zweites Fahrzeug überholt, während sich das zweite Fahrzeug in einer Bearbeitungsstation (1801 bis 1824) befindet.

9. Fördersystem nach einem der vorhergehenden Ansprüche, **dadurch gekennzeichnet, dass** mindestens ein Fahrzeug (12) eine für einen sich auf der Montageplattform (15) befindenden Werker zugängliche Eingabeeinrichtung (48, 52) aufweist, über die der Werker der Steuereinrichtung (38) eine von dem betreffenden Fahrzeug (12) noch anzufahrende Bearbeitungsstation (1801 bis 1824) vorgeben kann.

10. Fördersystem nach einem der vorhergehenden Ansprüche, **dadurch gekennzeichnet, dass** mindestens ein Fahrzeug (12) aus mehreren Untereinheiten (76, 78a, 78b) zusammengesetzt ist, die
quer zu einer Längsrichtung des Fahrzeugs (12) nebeneinander angeordnet sowie lösbar aneinander gekuppelt sind und
voneinander getrennte Fahrwerke aufweisen, so dass die Untereinheiten nach Entkuppeln getrennt und unabhängig voneinander verfahrbar sind, wobei mindestens eine der Untereinheiten einen eigenen Antrieb (20) hat.

11. Fördersystem nach Anspruch 10, **dadurch gekennzeichnet, dass** eine der Untereinheiten eine Werkstückträgereinheit (76) ist, welche die Werkstückaufnahme (13) aufweist, und dass eine andere Untereinheit eine Plattformeinheit (78a, 78b) ist, die zumindest im Wesentlichen frei für Werker (16) begehbar ist.

12. Verfahren zum gleichzeitigen Transport von Werkstücken und Werkern, bei dem mehrere Fahrzeuge (12) bereitgestellt werden, die jeweils eine Werkstückaufnahme (13), eine für Werker (16) begehbare Montageplattform (15) und einen eigenen Antrieb (20) haben, der dazu eingerichtet ist, das jeweilige Fahrzeug unabhängig von den anderen Fahrzeugen anzutreiben,
wobei die Fahrzeuge (12) so gesteuert werden, dass sie in Abhängigkeit von dem transportierten Werkstück (14) individuell unterschiedliche Abfolgen von Bearbeitungsstationen (1801 bis 1824) abfahren, die zur Durchführung unterschiedlicher Bearbeitungsschritte eingerichtet sind,
**dadurch gekennzeichnet, dass**
die Fahrzeuge (12) jeweils eine Detektionseinrichtung (42) haben, welche die Anwesenheit eines Werkers (16) auf der jeweiligen Montageplattform (15) detektiert.

13. Verfahren nach Anspruch 12, **dadurch gekennzeichnet, dass** die Fahrzeuge (12) eine Steuerungseinrichtung (38) zu vorgegebenen Zeitpunkten oder ereignisgesteuert über die Art und den Fertigstellungszustand des jeweils transportieren Werkstücks informieren, und dass die Steuerungseinrichtung (38) für jedes Fahrzeug (12) unter Berücksichtigung des Belegungszustands der Bearbeitungsstationen (1801 bis 1824) mit anderen (12) Fahrzeugen zumindest eine als nächste anzufahrende Bearbeitungsstation (1801 bis 1824) und vorzugsweise die Abfolge aller noch anzufahrenden Bearbeitungsstationen (1801 bis 1824) festlegt.

14. Verfahren nach Anspruch 12 oder 13, **dadurch gekennzeichnet, dass** die Detektionseinrichtung (42) den Ort eines Werkers (16) auf der jeweiligen Montageplattform (15) detektiert.

15. Verfahren nach einem der Ansprüche 12 bis 14, **dadurch gekennzeichnet, dass** die Anwesenheit eines Werkers von einem berührungsempfindlichen Bodenbelag (42) detektiert wird, der zumindest einen Teil der Montageplattform (15) überdeckt.

## Claims

1. Conveyor system (10) for the simultaneous transport of workpieces (14) and workers (16), comprising
a plurality of vehicles (12) each having a workpiece mount (13), an assembly platform (15) which can be walked on by workers (16) and its own drive (20) configured to drive the respective vehicle (12) independently of other vehicles of the conveyor system (10),
a plurality of processing stations (1801 to 1816) configured to perform different processing steps, and with
a control device (38) for controlling the vehicles (12),
wherein
the control device (38) is configured to control the vehicles (12) such that they individually travel different sequences of processing stations (1801 to 1824) depending on the transported workpiece (14),
**characterized in that**
the vehicles (12) each have a detection device (42) configured to detect the presence of a worker (16) on the respective assembly platform (15).

2. Conveyor system according to claim 1, **characterized in that** at least some of the processing stations (1801 to 1824) are arranged distributed such that they can only be approached by the vehicles (12) by traveling sideways or cornering but without a reversal of the direction of travel.

3. Conveyor system according to claim 1 or 2, **characterized in that** the vehicles (12) each have an omnidirectional drive (20) with which the vehicles (12) can drive in any direction from a standstill.

4. Conveyor system according to claim 1, **characterized in that** the detection device (42) is configured to detect the location of a worker (16) on the respective assembly platform (15).

5. Conveyor system according to claim 4, **characterized in that** the detection device (42) is configured to detect the location of a worker (16) on the respective assembly platform (15) with a location resolution of at least 50 cm.

6. Conveyor system according to any of the preceding claims, **characterized in that** the detection device comprises an identification element (44a, 44b) to be worn by the worker and a reading device (46) arranged on the vehicle (12) and configured to read information stored on the identification element contactlessly.

7. Conveyor system according to any of the preceding claims, **characterized in that** the detection device comprises a touch-sensitive floor covering (42) which covers at least part of the assembly platform (15).

8. Conveyor system according to one of the previous claims, **characterized in that** the control device (38) is configured to control the vehicles (12) such that a first vehicle overtakes a second vehicle while the second vehicle is in a processing station (1801 to 1824).

9. Conveyor system according to one of the previous claims, **characterized in that** at least one vehicle (12) has an input device (48, 52) which is accessible to a worker located on the assembly platform (15) and via which the worker can specify to the control device (38) a processing station (1801 to 1824) which the vehicle (12) concerned still has to approach.

10. Conveyor system according to one of the previous claims, **characterized in that** at least one vehicle (12) is composed of a plurality of subunits (76, 78a, 78b) which
are arranged side by side transversely with respect to a longitudinal direction of the vehicle (12), as well as
are detachably coupled to each other and
comprise chassis which are separate from one another, so that the subunits can be moved separately and independently of one another after uncoupling, wherein at least one of the subunits has its own drive (20).

11. Conveyor system according to claim 10, **characterized in that** one of the subunits is a workpiece carrier unit (76) which comprises the workpiece mount (13) and **in that** another subunit is a platform unit (78a, 78b) which can be walked on at least substantially freely by workers (16).

12. Method for the simultaneous transport of workpieces and workers, in which a plurality of vehicles (12) are provided, each having a workpiece mount (13), an assembly platform (15) which can be walked on by workers (16) and its own drive (20) configured to drive the respective vehicle independently of the other vehicles,
wherein the vehicles (12) are controlled such that, depending on the transported workpiece (14), they individually travel different sequences of processing stations (1801 to 1824) configured to perform different processing steps,
**characterized in that**
the vehicles (12) each have a detection device (42) that detects the presence of a worker (16) on the respective assembly platform (15).

13. Method according to claim 12, **characterized in that** the vehicles (12) inform a control device (38) at predetermined time points or in an event-controlled manner about the type and the state of completion of the respective workpiece being transported, and **in that** the control device (38) determines for each vehicle (12) at least one processing station (1801 to 1824) to be approached next and preferably the sequence of all processing stations (1801 to 1824) still to be approached, taking into account the occupancy state of the processing stations (1801 to 1824) with other vehicles (12).

14. Method according to claim 12 or 13, **characterized in that** the detection device (42) detects the location of a worker (16) on the respective assembly platform (15).

15. Method according to any of claims 12 to 14, **characterized in that** the presence of a worker is detected by a touch-sensitive floor covering (42) which covers at least part of the assembly platform (15).

## Revendications

1. Système de transport (10) pour le transport simultané de pièces à usiner (14) et d'ouvriers (16), avec
plusieurs véhicules (12) qui ont chacun un logement de pièce à usiner (13), une plate-forme de montage (15) accessible pour des ouvriers (16) et leur propre entraînement (20) qui est configuré pour entraîner le véhicule respectif (12) indépendamment d'autres véhicules du système de transport (10),
plusieurs postes d'usinage (1801 à 1816) qui sont configurés pour la réalisation de différentes étapes d'usinage, et avec
un dispositif de commande (38) pour la commande des véhicules (12),
dans lequel
le dispositif de commande (38) est configuré pour commander les véhicules (12) de sorte qu'ils quittent individuellement différentes successions de postes d'usinage (1801 à 1824) en fonction de la pièce à usiner transportée (14), **caractérisé en ce que**
les véhicules (12) ont chacun un dispositif de détection (42) qui est configuré pour détecter la présence d'un ouvrier (16) sur la plate-forme de montage respective (15).

2. Système de transport selon la revendication 1, **caractérisé en ce qu'**au moins certains des postes d'usinage (1801 à 1824) sont disposés de manière répartie de sorte qu'ils peuvent être approchés par les véhicules (12) uniquement par un déplacement latéral ou en courbe, mais sans inversion du sens de déplacement.

3. Système de transport selon la revendication 1 ou 2, **caractérisé en ce que** les véhicules (12) ont chacun un entraînement omnidirectionnel (20) avec lequel les véhicules (12) peuvent rouler dans une direction quelconque au départ du poste.

4. Système de transport selon la revendication 1, **caractérisé en ce que** le dispositif de détection (42) est configuré pour détecter l'emplacement d'un ouvrier (16) sur la plate-forme de montage respective (15).

5. Système de transport selon la revendication 4, **caractérisé en ce que** le dispositif de détection (42) est configuré pour détecter l'emplacement d'un ouvrier (16) sur la plate-forme de montage respective (15) avec une résolution spatiale d'au moins 50 cm.

6. Système de transport selon une des revendications précédentes, **caractérisé en ce que** le dispositif de détection comprend un élément d'identification (44a, 44b) à porter par l'ouvrier et un dispositif de lecture (46) disposé sur le véhicule (12) qui est configuré pour lire sans contact des informations mémorisées sur l'élément d'identification.

7. Système de transport selon une des revendications précédentes, **caractérisé en ce que** le dispositif de détection (42) comprend un revêtement de sol sensible au contact (42) qui recouvre au moins une partie de la plate-forme de montage (15).

8. Système de transport selon une des revendications précédentes, **caractérisé en ce que** le dispositif de commande (38) est configuré pour commander les véhicules (12) de sorte qu'un premier véhicule double un second véhicule pendant que le second véhicule se trouve dans un poste d'usinage (1801 à 1824).

9. Système de transport selon une des revendications précédentes, **caractérisé en ce qu'**au moins un véhicule (12) présente un dispositif de saisie (48, 52) accessible pour un ouvrier se trouvant sur la plate-forme de montage (15) par le biais duquel l'ouvrier peut prédéfinir au niveau du dispositif de commande (38) un poste d'usinage (1801 à 1824) encore à approcher par le véhicule concerné (12).

10. Système de transport selon une des revendications précédentes, **caractérisé en ce qu'**au moins un véhicule (12) est composé de plusieurs sous-unités (76, 78a, 78b) qui
sont disposées côte à côte transversalement à une direction longitudinale du véhicule (12) ainsi qu'accouplées de manière amovible l'une à l'autre et présentent des mécanismes de roulement séparés l'un de l'autre de sorte que les sous-unités peuvent être déplacées après découplage séparément et indépendamment l'une de l'autre, dans lequel au moins une des sous-unités a son propre entraînement (20).

11. Système de transport selon la revendication 10, **caractérisé en ce qu'**une des sous-unités est une unité de porte-pièce (76) qui présente le logement de pièce à usiner (13) et qu'une autre sous-unité est une unité de plate-forme (78a, 78b) qui est accessible au moins essentiellement librement pour des ouvriers (16).

12. Procédé pour le transport simultané de pièces à usiner et d'ouvriers, lors duquel plusieurs véhicules (12) sont mis à disposition, lesquels ont chacun un logement de pièce à usiner (13), une plate-forme de montage (15) accessible pour des ouvriers (16) et leur propre entraînement (20) qui est configuré pour entraîner le véhicule respectif indépendamment des autres véhicules,
dans lequel les véhicules (12) sont commandés de sorte qu'ils quittent individuellement différentes successions de postes d'usinage (1801 à 1824) en fonction de la pièce à usiner transportée (14) qui sont configurés pour la réalisation de différentes étapes d'usinage,
**caractérisé en ce que**
les véhicules (12) ont chacun un dispositif de détection (42) qui détecte la présence d'un ouvrier (16) sur la plate-forme de montage respective (15).

13. Procédé selon la revendication 12, **caractérisé en ce que** les véhicules (12) informent un dispositif de commande (38) à des instants prédéfinis ou de manière commandée par l'événement du type et de l'état de fabrication de la pièce à usiner transportée respectivement, et que le dispositif de commande (38) définit pour chaque véhicule (12) en tenant compte de l'état d'occupation des postes d'usinage (1801 à 1824) avec d'autres véhicules (12) au moins un poste d'usinage à approcher en tant que suivant (1801 à 1824) et de préférence la succession de tous les postes d'usinage encore à approcher (1801 à 1824).

14. Procédé selon la revendication 12 ou 13, **caractérisé en ce que** le dispositif de détection (42) détecte l'emplacement d'un ouvrier (16) sur la plate-forme de montage respective (15).

15. Procédé selon une des revendications 12 à 14, **caractérisé en ce que** la présence d'un ouvrier est détectée par un revêtement de sol sensible au contact (42) qui recouvre au moins une partie de la plate-forme de montage (15).
